# EUROPEAN PATENT APPLICATION

(11) **EP 4 357 996 A1**
(43) Date of publication of application: **24.04.2024**
(21) Application number: 23204189.7
(22) Date of filing: 17.10.2023
(51) Int. Cl.: G06Q 10/087, G06Q 30/018, G07C 5/08

(54) **METHOD FOR IDENTIFYING A VEHICLE PART MOUNTED IN A VEHICLE**

(30) Priority: 17.10.2022 EP 22202021
(71) Applicant: Volvo Car Corporation, 405 31 Göteborg (SE)
(72) Inventor: SASLECOV, Venti, 40531 Göteborg (SE); ROSENBERG, Johan, 40531 Göteborg (SE); SALOMONSSON, Håkan, 40531 Göteborg (SE)
(74) Representative: Maiwald GmbH

(57) **Abstract**

The disclosure relates to a method (200) for identifying a vehicle part (20) mounted in a vehicle (10), the method (200) comprising:
- sending a test signal to a test device (22) of the vehicle part (20) by a control unit (30) of the vehicle (10),
- measuring a response of the test device (22) to the test signal by the control unit (30),
- comparing the measured response to a nominal response stored in a database (40), the nominal response being indicative of a measured response of a test device (22) of a vehicle-associated vehicle part (20) that is associated with the vehicle (10), and
- identifying that the vehicle part (20) mounted in the vehicle (10) is the vehicle-associated vehicle part (20) or not based on the comparison of the measured response to the nominal response.

## Description

### TECHNICAL FIELD

The present disclosure relates to a method for identifying a vehicle part mounted in a vehicle, a method for associating a vehicle part with a vehicle, a system comprising a vehicle part and a control unit, and a computer program product.

### BACKGROUND ART

Known vehicle parts for mounting in a vehicle typically comprise visually displayed information such as part numbers for identifying the compatibility of the vehicle part with a vehicle. Such part numbers may be represented by a barcode, for example, and scanned when mounting it in the vehicle. While combability of the vehicle part may thereby be checked at the time of and after mounting the vehicle part in the vehicle, e.g., when manufacturing or servicing the vehicle, it is not possible to identify whether that vehicle part may have been stolen or is not a genuine or authorized vehicle part.

### SUMMARY

It is an object of the present disclosure to provide a solution of how stolen or unauthorized vehicle parts mounted in a vehicle may be identified.
The problem is at least partially solved or alleviated by the subject matter of the independent claims of the present disclosure, whereby further examples are incorporated in the dependent claims.

According to a first aspect of this disclosure, there is provided a method for identifying a vehicle part mounted in a vehicle, the method comprising: sending a test signal to a test device of the vehicle part by a control unit of the vehicle, measuring a response of the test device to the test signal by the control unit, comparing the measured response to a nominal response stored in a database, the nominal response being indicative of a measured response of a test device of a vehicle-associated vehicle part that is associated with the vehicle, and identifying that the vehicle part mounted in the vehicle is the vehicle-associated vehicle part or not based on the comparison of the measured response to the nominal response.

Accordingly, the method of the first aspect of this disclosure provides for an identification of a vehicle part based on a testing of a test device thereof. The testing is done by sending a test signal to a test device and measuring a response to the test signal by the test device. Both, sending the test signal and measuring the response is done by the control unit of the vehicle such that no specific or expensive test equipment, which may be present at a service workshop only, is needed for testing. Instead, these steps of the method may be conveniently performed on the vehicle only. The control unit may comprise a computer, microprocessor, electric circuitry, switches and/or other electronic components, for example. The control unit may be configured as a control unit configured for testing of the vehicle part only or serve other functions as well. For example, the control unit may be configured for controlling the vehicle part. Accordingly, the control unit may be a control unit of the vehicle part. However, the control unit may also serve further functions or vehicle parts. For example, the control unit may be a central control unit of the vehicle.

The measured response is then compared to a nominal response stored in a database. Such database may be also referred to as an identification database. The database may be located on a storage of the vehicle or a storage on any other device, such as a cloud server, or similar, for example. Accordingly, the database may be a vehicle database or a cloud database. The vehicle may, in particular via the control unit or any other control unit, wirelessly communicate with such cloud database. The comparison may be performed by the control unit and/or any other control unit or computer of the vehicle or on the other device, such as the cloud server, for example. Similarly, the identifying may be performed on the vehicle or on the other device. In both cases, the result of the identification may be output by the vehicle or output by the other device and sent to the vehicle or any other instance, e.g., a computer of the vehicle manufacturer or of an authorized service workshop.

The nominal response is indicative of the measured response of a test device of a vehicle-associated vehicle part that is associated with the vehicle. In other words, the database contains a nominal response of a test device of a vehicle part, that has been associated with the vehicle and thus allows for identification of the currently mounted vehicle part. Accordingly, there are different outcomes of the method. One of these outcomes is that the vehicle part mounted in the vehicle is the vehicle-associated vehicle part. This means that the vehicle part currently mounted has not been changed after its association with the vehicle, in particular at the time of manufacturing or during authorized service in case of an authorized exchange of the vehicle part, in which the vehicle part may also have been associated with the vehicle by storing a measured response thereof in the database. In the other one of these cases, the vehicle part may have been replaced by a counterfeit or, in other words, ungenuine or unauthorized, or stolen vehicle part.

Accordingly, it is possible to identify stolen or unauthorized, i.e., not authorized by the vehicle manufacturer, or, in other words, not genuine vehicle parts. Such parts may be dangerous in terms of passenger safety as they may not be fully compatible or fulfill certain quality standards, for example.

The database may only store the nominal response or nominal responses of test devices of vehicle-associated vehicle parts. By means of this association and storage of the nominal response, the database may serve as an identification database, in particular as a verification database, by means of which it is possible to verify that a vehicle part was, by means of its measured response, mounted into the vehicle when manufacturing it or during authorized service. For example, the vehicle manufacturer and/or authorized service workshops may have access to the database to associate a measured response with a vehicle, e.g., on the vehicle or any other device, such as a cloud device, as explained above. Accordingly, when an unauthorized or ungenuine vehicle part was mounted in the vehicle, its measured response of its test device was not previously associated with the vehicle. In this case, the database may contain no entry of a nominal response corresponding to the measured response of the respective test device when testing it. In this case, it may be identified that the vehicle part is in fact an unauthorized or ungenuine vehicle part.

Alternatively, the database may contain an entry of a nominal response corresponding to the measured response of the respective test device when testing it, but it may be associated with another vehicle according to the database. If this is by chance, then the vehicle part may still be unauthorized or ungenuine. In the alternative, the vehicle part may have been stolen from the vehicle with which it is associated. Hence, the method may provide for convenient and reliable verification that a vehicle part is genuine and not stolen or, in the alternative, identification that it was stolen or is not genuine. For example, if a stolen or ungenuine vehicle part is detected, a notification may be provided. For example, the notification may comprise a warning information that the vehicle part is stolen or not genuine.

Identifying that the vehicle part mounted in the vehicle is the vehicle-associated vehicle part or not may comprise identifying that the vehicle part mounted in the vehicle is the vehicle-associated vehicle part if the measured response corresponds to the nominal response, or identifying that the vehicle part mounted in the vehicle is not the vehicle-associated vehicle part if the measured response does not correspond to the nominal response. In other words, the identification based on the comparison may include determining a correspondence between the measured response and nominal response. Whether the measured response corresponds to the nominal response or not may be determined by the comparison of the measured response to the nominal response or, in case the database contains several nominal responses, e.g., a unique nominal response for every interchangeable vehicle part as described further below, to different nominal responses, until some correspondence is found. Corresponding may require an exact or approximate match of the measured response and the nominal response. Accordingly, it is not necessarily required that the measured response and the nominal response are exactly the same, but it may be sufficient that they are approximately the same. For example, it is possible that the nominal response includes a threshold or a threshold range for the measured response, into which it must fall to establish that the measured response corresponds to the nominal response.

The test device in that or any vehicle part may be configured to always respond with the same response. The response of the test device may be characteristic for that test device. Thereby, the response is associated with the test device. Always responding with the same response may be depending on or be independent from the test signal, e.g., a strength of the test signal. Similarly, the test signal sent may always be the same in that vehicle and/or for any other vehicle.

In an example, the database may comprise several nominal responses indicative of measured responses of different test devices of vehicle-associated interchangeable vehicle parts that are associated with the vehicle, wherein the nominal responses are different for each one of the different test devices. Accordingly, there may be only one nominal response for each one of the vehicle parts in the database. Hence, the test device may be configured such that its response is different from the responses of other test devices of interchangeable vehicle parts. Interchangeable vehicle parts are vehicle parts, that are at least compatible with each other and that may be exchanged among vehicles. Accordingly, interchangeable vehicle parts may comprise at least the same connection interfaces. Further, the interchangeable vehicle parts may be of the same type, e.g., an air bag unit, an air bag controller, a safety belt, a safety belt actuator, etc. Interchangeable vehicle parts may also be from the same vehicle manufacturer. Accordingly, for interchangeable vehicle parts, there may be provided several different responses by virtue of the configuration of their test devices. The different responses of these test devices may be stored in the database, in particular when it is stored on a cloud device. By providing test devices with different responses, it may be more precisely identified whether a vehicle part is stolen based on the association of different nominal responses with respective vehicles and further, it may be more difficult for manufacturers of ungenuine or unauthorized parts to distribute them as genuine or authorized parts as these may be more easily identified by the proposed method.

In an example, the nominal responses in the database may be unique for each one of the different test devices. In other words, the database may comprise unique nominal responses indicative of measured responses of different test devices of vehicle-associated interchangeable vehicle parts that are associated with the vehicle, wherein the nominal responses are unique for each one of the different test devices. Accordingly, each nominal response may be only included once in the database. Accordingly, each nominal response may only be of one or refer to one test device and thereby vehicle part. Hence, the test device may be configured with a unique response among test devices of interchangeable vehicle parts. Accordingly, the response of any given test device of any given interchangeable vehicle part is provided or present only once. Thereby, every vehicle part is unique and may be identified and traced. Thereby, it is possible to determine from which vehicle a stolen part originated with a very high level of certainty and to make it very difficult for ungenuine or unauthorized vehicle parts to be used in vehicles.

In an example, the test device and the control unit are connected to each other by an electric circuit. Accordingly, the control unit may measure the response on that electric circuit. Specifically, the electric circuit may have a line leading the test signal from the control unit to the test device and a return line for leading the test signal, after alteration thereof so that it forms the specific response of the test device, back to the control unit. The control unit may thus easily measure the response on the electric circuit.

In an example, the electric circuit may be a closed electric circuit. In particular, only the control unit and the test device may be included in that closed electric circuit, which reduces the risk of manipulation thereof.

In an example, the test signal may be a test current. For example, the test current may be of a predefined current and send for a predefined time. The test device may be an electronic test device capable of receiving such test current. The electronic test device may comprise one or more circuitries, which may have one or more different electronical components, such as but not limited to, for example, a resistance and a capacitor, for example. The response may be a response current. The response may be received at the control unit of the vehicle after passing through the test device. By means of its circuitry, the test device may modify the initial test current sent and thereby provide a characteristic response based on the design of the test device, in particular its circuitry.

In an example, the measured response may be a measured current varying from the test current. For example, any electric parameter, such as but not limited to a voltage and/or current, of the measured current may vary from the test current. Further, for example, any delay, drop and/or increase in any electrical parameter, such as the ones mentioned, may be the modification of the measured current compared to the test current by the test device.

In an example, the measured current may vary from the test current by any of a delay, drop and/or increase of an electric parameter from the (test) current. The variation may be provided by a combination of different electronical components, in particular in an electronic circuitry, of the test device, such as different resistances and/or capacitors and/or arrangements thereof, for example. Any variation of the measured current from the test current may be discrete or continuous. With a continuous variation, a high variety among different responses may be provided. With a discrete variation, a simple and effective provision of pulses of current at different times may be provided. For example, the discrete variation and/or the continuous variation may comprise time-dependent quantities or periodically time-dependent quantities, transition quantities or random quantities. The discrete variation may, for example, occur in the form of mixed voltage values and/or potential values. In addition, or alternatively, the discrete variation may, for example, comprise different continuously repeating and/or single occurrence voltages and/or potential values. Furthermore, for example, the continuous variation may occur in the form of alternating voltages and/or potential values. In addition, or alternatively, the continuous variation may be harmonic voltage (e.g., sinusoidal voltage) and/or non-harmonic voltage (e.g., square wave voltage). Such discrete voltage signal or continuous voltage signal may comprise, for example, continuous-time or discrete-time and continuous-value or discrete-value voltages.

In an example, the vehicle part may be from a vehicle restraint system.

In an example, the vehicle restraint system or vehicle part may be at least from an air bag and a safety belt. This includes that the vehicle part may be a subpart of any of an air bag and a safety belt or the entire component or vehicle restraint system. For example, the vehicle part may be the air bag or safety belt. Alternatively, however, the vehicle part may be a subpart such as a controller, actuator or any other kind of the air bag and safety belt. For example, the actuator may be an electric actuator for tensioning the safety belt or a pyrotechnical actuator for deploying the air bag.

In an example, the nominal response may be stored together with vehicle identification information of the vehicle in a storage of the vehicle. The vehicle identification information may be a vehicle identification number (VIN) of the vehicle, for example. Thereby, a unique association of the nominal response to the vehicle may be provided.

In an example, the measured response of the test device of the vehicle-associated vehicle part may have been associated with the vehicle identification information at a time of or after mounting the vehicle part in the vehicle. As previously explained, this may have been done when initially manufacturing the vehicle or when servicing it at an authorized service workshop, where access to the database may have been granted.

The database may comprise a Block Chain or Blockchain technology, wherein the association of the measured response with the vehicle, in particular the vehicle identification information, may be stored in a Block Chain. In this process, each data record within the block chain may be created according to a consensus procedure and appended to an existing chain using cryptographic methods. Furthermore, each block may usually contain a cryptographically secured hash (scatter value) of the preceding block.

According to a second aspect of this disclosure, there is provided a method for associating a vehicle part with a vehicle, the method comprising: sending a test signal to a test device of the vehicle part mounted in or to be mounted in the vehicle by a control unit of the vehicle, measuring a response of the test device to the test signal by the control unit, associating the measured response with vehicle identification information of the vehicle, and storing the association of the measured response to the vehicle identification information in a database.

Accordingly, the method of the second aspect of this disclosure relates to the association of the vehicle part to the vehicle, in particular its vehicle identification information, in the database, e.g., on a storage of the vehicle or any other device, in particular a cloud device such as a cloud server, for example. For example, the method may be repeated for several different vehicles for the same vehicle part or interchangeable vehicle part, wherein each one of the vehicle parts has a different or unique response.

In an example, the method may further comprise associating vehicle part identification information of the vehicle part with the measured, and storing the association of the vehicle part identification information with the measured response in the database.

The method may further comprise mounting the vehicle part in the vehicle, wherein the measured response of the test device may be associated with the vehicle identification information at a time of or after mounting the vehicle part in the vehicle. This may be done when manufacturing the vehicle or servicing it, as explained above, for example.

According to a third aspect of this disclosure, there is provided a system comprising a vehicle part and a control unit, the control unit being configured to send a test signal to a test device of the vehicle part and to measure the response of the test device to the test signal, the system being configured to execute the method of the first aspect of this disclosure and/or the method of the second aspect of this disclosure.

The system may further comprise a storage comprising the database. The system may further comprise the vehicle. The control unit may be part of the vehicle. The vehicle part may be mounted in the vehicle. The storage may be of the vehicle or any other device, e.g., a cloud device, such as a cloud server. Such other device may comprise wireless communication means for communicating with the control unit of the vehicle regarding the content of the database, i.e., the nominal response stored therein.

According to a fourth aspect of this disclosure, there is provided a computer program product comprising instructions to cause the system of the third aspect of this disclosure to execute the method of the first aspect of this disclosure and/or the method of the second aspect of this disclosure

It is noted that the above examples may be combined with each other irrespective of the aspect involved. Accordingly, any features described herein with respect to the method of the first aspect of this disclosure may be used with respect to the method of the second aspect of this disclosure, the system of the third aspect and the computer program product, and vice versa. For example, the configuration of the test device, test signal, vehicle part, nominal response as explained above is independent from the respective aspect with which it was mentioned and may be applied to any other aspect of this disclosure. As an example, the test signal may be a test current, and the vehicle part may be from a vehicle restraint system in the method of the second aspect of this disclosure.

### BRIEF DESCRIPTION OF DRAWINGS

Examples of the disclosure will be described in the following with reference to the following drawings.
- Fig. 1: are flow charts of examples of methods of this disclosure; and
- Fig. 2: is an example of a system of this disclosure.

Notably, the figures are merely schematic representations and serve only to illustrate examples of the present disclosure. Identical or equivalent elements are in principle provided with the same reference signs.

### DETAILED DESCRIPTION

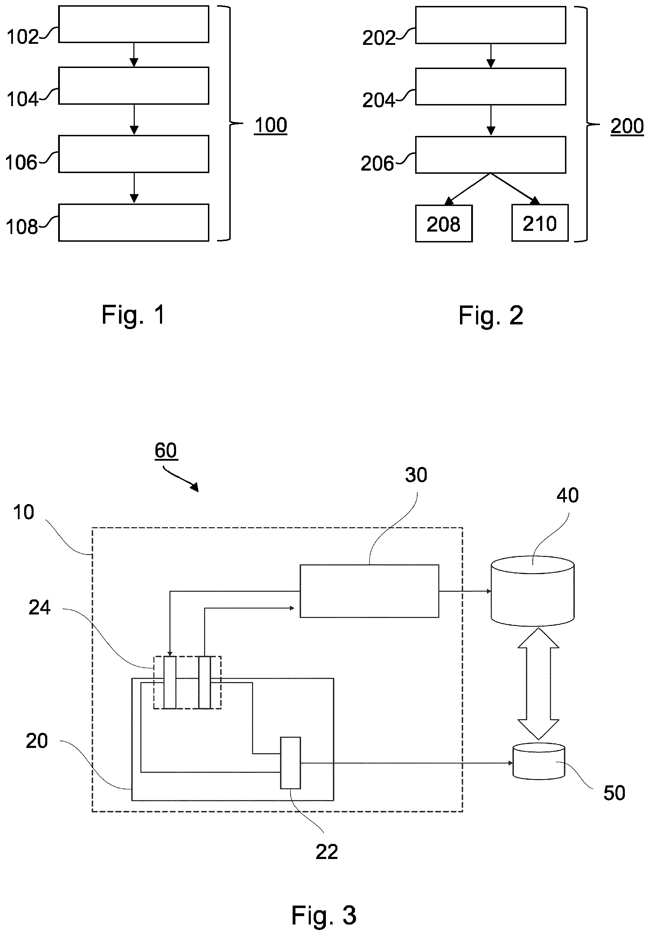

Fig. 1 shows a first method 100 for associating a vehicle part 20 of a vehicle 10 as seen in Fig. 3 according to an example of this disclosure. The vehicle part 20 may be associated with the vehicle 10 particularly by means of vehicle identification information of the vehicle 10, which may be a vehicle identification number (VIN), for example. The first method 100 may be performed during, shortly before or after installing the vehicle part 20 in the vehicle 10.

In step 102 of method 100, a test signal is being sent to a test device 22 of the vehicle part 20, which may be mounted in the vehicle 10 at this time or chosen to be mounted in the vehicle 10. The vehicle part 20 may be from a vehicle restraint system of the vehicle 10 such as, for example, from an air bag and/or a safety belt. The test signal may be a test current, for example. As may be seen from Fig. 3, the test signal may be sent by a control unit 30 of the vehicle 10. Such test signal may be received through a connection means 24 at the vehicle part 20, providing a connection, in particular cabled connection, between the test device 22 and the control unit 30. Such connection means 24 may be electrical such that the test signal may be received as test current.

In step 104 of method 100, a response of the test device 22 to the test signal is measured. For example, the response may be a current varying from the test current, in particular by a delay, drop and/or increase of an electric parameter from the test current, such as voltage. This current may be sent back to the control unit 30. This is seen in Fig. 3 where an electric circuit between the control unit 30 and the test device 22 is shown. Accordingly, the varied current may be measured as response by the control unit 30, for example.

In step 106 of method 100, the measured response is then associated with the vehicle identification information of the vehicle 10.

In step 108, the association of the measured response to the vehicle identification information such as, for example, the VIN, is stored in a database 40. This may be done via the control unit 30 of the vehicle 10. The database 40 may be located (on a storage) on the vehicle 10 or externally thereof, in particular on a cloud-storage or cloud-server. In the latter case, the database 40 may be from a vehicle manufacturer, for example. The vehicle 10 may be configured to wirelessly communicate with such cloud-server.

There may be a further database 50, in which vehicle part identification information of the vehicle parts 20 may be stored. This further database 50 may be from a manufacturer of the vehicle parts 20, for example. It is possible to further associate the vehicle identification information associated with the measured response with vehicle part identification information received by the further database 50 and/or stored on the vehicle part 20. Such vehicle part identification information may be unique for every vehicle part 20.

The first method 100 may be repeated for several vehicles 10 during manufacturing and/or servicing thereof, when interchangeable vehicle parts 20 are mounted in these vehicles 10. This at least means that the vehicle parts 20 may be used among different ones of the vehicles 10 for the same purpose. In each case, the test device 22 of the vehicle part 20 may be different from other test devices 22 in their response or unique. Accordingly, the database 40 may comprise several measured responses, in the following referred to as nominal responses, indicative of measured responses of different test devices 22 of interchangeable vehicle-associated vehicle parts 20 that are associated with the vehicle 10, wherein the nominal responses are different or unique for each one of the different test devices 22. Thereby, the same nominal response may be assigned to one or only few vehicles 10 by means of its VIN.

In the second method 200 of Fig. 2, it is, after manufacturing or servicing, tested whether the vehicle part 20 currently mounted in the vehicle 10 is the one that is associated with the vehicle identification information in the database 40. Such test may be performed at a service workshop or by the vehicle 10 itself via the control unit 30, for example. Such test may be performed at intervals, e.g., random intervals or predetermined intervals, and/or after predetermined events, e.g., an alarm system of the vehicle 10 being triggered.

In step 202 of method 200, a test signal is sent to the test device 22 of the vehicle part 20. This may be the same, e.g., also a test current and/or of the same configuration, e.g., voltage, or a different test signal than was sent in the method 100.

In step 204 of method 100, a response of the test device 22 to the test signal is measured by the control unit 30 of the vehicle 10.

In step 206 of method 200, the measured response is compared to the nominal response stored in the database 40. The nominal response is indicative of the previously measured response of a test device 22 of a vehicle-associated vehicle part 20 that was associated with the vehicle 10 during manufacturing and/or servicing, for example. Accordingly, if the vehicle part 20 was not exchanged in the meantime with a stolen or ungenuine or, in other words, counterfeit vehicle part 20, than the measured response should correspond to the nominal response and the vehicle parts 20 are the same genuine and under authorization mounted vehicle parts 20.

Accordingly, in step 208 of method 200, it is identified that the vehicle part 20 mounted in the vehicle 10 is the vehicle associated vehicle part 20 when the measured response corresponds to the nominal response associated with the vehicle identification information of that vehicle 10 in the database 40.

In the alternative, in step 210 of method 200, it is identified that the vehicle part 20 mounted in the vehicle 10 is not the vehicle-associated vehicle part 20 when the measured response does not correspond to the nominal response associated with the vehicle identification information of that vehicle 10 in the database 40. In this case, it may be detected that the vehicle part 20 is not genuine or stolen. For example, when the, in particular unique, measured response has a match in the database 40 but for another vehicle 10 with which the vehicle part 20 having that measured response is associated, it may be possible to detect that the vehicle part 20 was stolen from that vehicle 10.

Fig. 3 shows the vehicle 10 as already explained above with its vehicle part 20 and control unit 30. The vehicle part 20, the control unit 30 and/or the entire vehicle 10 may be part of a system 60. That system 60 may further comprise any one or both of the databases 40, 50. For example, the database 40 may be stored on the vehicle 10 or on a cloud-server. In the latter case, the cloud-server may be part of the system 60. The vehicle 10 or the control unit 30 may be configured to wirelessly communicate with the database 40. The steps of the methods 100, 200 explained above may be carried out by the system 60. In particular, different steps may be carried out by different parts of the system 60 as shown herein and/or by a computer not shown herein or as alternative to the control unit 30. For example, steps 206, 208, 210 may be carried out by the cloud-server, the control unit 30 or a computer of the vehicle 10 or any other computer, for example of a service workshop.

As used herein, the phrase "at least one," in reference to a list of one or more entities should be understood to mean at least one entity selected from any one or more of the entities in the list of entities, but not necessarily including at least one of every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. A computer program product may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 20: vehicle part
- 22: test device
- 24: connection means
- 30: control unit
- 40: database
- 50: further database
- 60: system
- 100: first method
- 102 - 108: steps of first method
- 200: second method
- 202 - 210: steps of second method

## Claims

1. A method (200) for identifying a vehicle part (20) mounted in a vehicle (10), the method (200) comprising:
- sending a test signal to a test device (22) of the vehicle part (20) by a control unit (30) of the vehicle (10),
- measuring a response of the test device (22) to the test signal by the control unit (30),
- comparing the measured response to a nominal response stored in a database (40), the nominal response being indicative of a measured response of a test device (22) of a vehicle-associated vehicle part (20) that is associated with the vehicle (10), and
- identifying that the vehicle part (20) mounted in the vehicle (10) is the vehicle-associated vehicle part (20) or not based on the comparison of the measured response to the nominal response.

2. The method (200) according to claim 1, wherein the database (40) comprises several nominal responses indicative of measured responses of different test devices (22) of vehicle-associated interchangeable vehicle parts (20) that are associated with the vehicle (10), wherein the nominal responses are different for each one of the different test devices (22).

3. The method (200) according to claim 2, wherein the nominal responses in the database (40) are unique for each one of the different test devices (22).

4. The method (200) according to any one of the previous claims, wherein the test device (22) and the control unit (30) are connected to each other by an electric circuit.

5. The method (200) according to claim 4, wherein the electric circuit is a closed electric circuit.

6. The method (200) according to any one of the previous claims, wherein the test signal is a test current.

7. The method (200) according to claim 6, wherein the measured response is a measured current varying from the test current.

8. The method (200) according to claim 7, wherein measured response varies by a delay, drop and/or increase of an electric parameter from the test current.

9. The method (200) according to any one of the previous claims, wherein the vehicle part (20) is of a vehicle restraint system of the vehicle (10).

10. The method (200) according to claim 9, wherein the vehicle restraint system is at least from an air bag and a safety belt.

11. The method (200) according to any one of the previous claims, wherein the nominal response is stored together with vehicle identification information of the vehicle (10) in a storage of the vehicle (10), wherein the measured response of the test device (22) of the vehicle-associated vehicle part (20) was associated with the vehicle identification information at a time of or after mounting the vehicle part (20) in the vehicle (10).

12. A method (100) for associating a vehicle part (20) with a vehicle (10), the method (100) comprising:
- sending a test signal to a test device (22) of the vehicle part (20) mounted in or to be mounted in the vehicle (10) by a control unit (30) of the vehicle (10),
- measuring a response of the test device (22) to the test signal by the control unit (30),
- associating the measured response with vehicle identification information of the vehicle (10), and
- storing the association of the measured response to the vehicle identification information in a database (40).

13. The method (100) according to claim 12, wherein the method (100) further comprises:
- associating vehicle part identification information of the vehicle part (20) with the measured response, and
- storing the association of the vehicle part identification information with the measured response in the database (40).

14. A system (60) comprising a vehicle part (20) and a control unit (30), the control unit (30) being configured to send a test signal to a test device (22) of the vehicle part (20) and to measure the response of the test device (22) to the test signal, the system (60) being configured to execute the method (200) of any one of claims 1 to 11 and/or the method (100) of any one of claims 12 or 13.

15. A computer program product comprising instructions to cause the system (60) of claim 14 to execute the method (200) of any one of claims 1 to 11 and/or the method (100) of any one of claims 12 or 13.
